# EUROPEAN PATENT APPLICATION

(11) **EP 4 306 245 A1**
(43) Date of publication of application: **17.01.2024**
(21) Application number: 23184563.7
(22) Date of filing: 10.07.2023
(51) Int. Cl.: B23B 5/16, B23C 5/20, B23C 5/22

(54) **CUTTING INSERT AND CUTTING TOOL EQUIPPED WITH CUTTING INSERT**

(30) Priority: 11.07.2022 JP 2022111162
(71) Applicant: Tungaloy Corporation, Iwaki-shi, Fukushima 970-1144 (JP)
(72) Inventor: OGAWA, Atsushi, Fukushima, 9701144 (JP); IWAKI, Katsuya, Fukushima, 9701144 (JP)
(74) Representative: Vossius & Partner Patentanwälte Rechtsanwälte mbB

(57) **Abstract**

A cutting insert (30) that can switch and use a total of four cutting edges while still suppressing an increase in the size of the cutting insert, and a cutting tool equipped with the cutting insert are provided. The cutting insert includes: a pair of first cutting edges (311, 312) that are disposed along sides delimiting a first end surface (110); a pair of first margins (411, 412) that are disposed along the other sides; a pair of second cutting edges (321, 322) that are disposed along sides delimiting a second end surface (120); a pair of second margins (421, 422) that are disposed along the other sides; a pair of first side surfaces (211, 212) that extend from the first cutting edges to the second margins; and a pair of second side surfaces (221, 222) that extend from the second cutting edges to the first margins.

## Description

### Background

### Field

The present invention relates to a cutting insert and a cutting tool equipped with the cutting insert.

### Description of Related Art

As an example of a cutting tool to cut an inner surface of a pipe or the like, a cutting tool that includes a plurality of cutting inserts, which are disposed in the circumferential direction, on the outer periphery side of a rotating body, is known. Each of the cutting inserts can be removed from the body and replaced. For example, in a cutting insert disclosed in Patent Publication JP-AS53-99586, a plurality of cutting edges are disposed in one cutting insert, and the mounting state of this cutting insert on the body is changed so as to change a cutting edge to be used for machining.

### Summary

For example, in a case of a configuration where the cutting edge to be used for machining can be changed by rotating the cutting insert 180° around an axis perpendicular to the rotational axis of the body, two cutting edges located at diagonal positions can be switched and used. If the cutting insert can also be reversed and mounted, then a total of four cutting edges can be switched and used.

In a cutting insert for cutting an inner surface, a portion called a "margin" that contacts the inner surface after cutting, may be disposed, in order to ensure straight traveling stability of the cutting tool and to improve roundness of a hole, for example. In the case of disposing a plurality of cutting edges in one cutting insert, a plurality of margins must be disposed corresponding to each cutting edge.

A margin must be created in a portion which is different from the portion where a cutting edge is disposed, out of a plurality of edges of the cutting insert. Therefore depending on the positions of the cutting edges and the margins, the entire size of the cutting insert may become large. However it has not been specifically considered how to dispose a plurality of cutting edges and margins respectively.

It is an object of the present invention to provide a cutting insert that can switch and use a total of four cutting edges while still suppressing an increase in the size of the cutting insert, and a cutting tool equipped with the cutting insert.

A cutting insert according to an aspect of the present invention is a cutting insert that is mounted on a body of a cutting tool, including: a first end surface; a pair of first cutting edges that are disposed to be parallel with each other along a pair of sides delimiting the first end surface respectively; a pair of first margins that are disposed to be parallel with each other along the other pair of sides delimiting the first end surface respectively; a second end surface that faces the first end surface; a pair of second cutting edges that are disposed to be parallel with each other along a pair of sides delimiting the second end surface respectively; a pair of second margins that are disposed to be parallel with each other along the other pair of sides delimiting the second end surface respectively; a pair of first side surfaces that extend from the first cutting edges to the second margins; and a pair of second side surfaces that extend from the second cutting edges to the first margins.

In the cutting insert having this configuration, the first side surface is disposed between the first cutting edge and the second margin, and the second side surface is disposed between the second cutting edge and the first margin. In a view perpendicular to the first end surface, the first cutting edge and the second margin approximately overlap with each other, and the second cutting edge and the first margin approximately overlap with each other. In other words, a plurality of cutting edges and a plurality of margins are disposed in an overlapped state respectively. Thereby the plurality of cutting edges can be switched and used while still suppressing an increase in the size of the cutting insert.

It is preferable that an angle formed by the first end surface and the first side surface that are adjacent to each other via the first cutting edge is less than 90°.

It is preferable that an angle formed by the second end surface and the second side surface that are adjacent to each other via the second cutting edge is less than 90°.

It is preferable that an angle formed by the first cutting edge and the first margin and the angle formed by the second cutting edge and the second margin are both angles which are different from 90°.

It is preferable that the lengths of the first cutting edges are the same as each other, and the lengths of the second cutting edges are the same as each other.

It is preferable that the length of the first cutting edge and the length of the second cutting edge are the same as each other.

It is preferable that the first end surface and the second end surface are parallel with each other.

It is preferable that an entire shape of the cutting insert rotated 180° around a first symmetric axis that is perpendicular to the first end surface is completely overlapped with the shape before the rotation, the entire shape of the cutting insert rotated 180° around a second symmetric axis that is parallel with the first end surface is completely overlapped with the shape before the rotation, and the entire shape of the cutting insert rotated 180° around a third symmetric axis that is parallel with the first end surface and has a direction which is different from the second symmetric axis is different from the shape before the rotation.

It is preferable that a recessed part, which extends along the first margin or the second margin, is formed in at least one of a space between the first margin and the second side surface, and a space between the second margin and the first side surface.

It is preferable that a portion of an inner surface of the recessed part adjacent to the first margin or the second margin is a flat surface.

It is preferable that a cutting tool includes the cutting insert according to any one of the above aspects.

According to the present invention, a cutting insert that can switch and use a total of four cutting edges while still suppressing an increase in the size of the cutting insert, and a cutting tool equipped with the cutting insert can be provided.

### Brief Description of Drawings

FIG. 1 is a diagram depicting a configuration of a cutting insert according to Embodiment 1, and a cutting tool equipped with this cutting insert;
FIG. 2 is a diagram depicting a configuration of the cutting insert according to Embodiment 1, and the cutting tool equipped with this cutting insert;
FIG. 3 is a diagram depicting a configuration of the cutting insert according to Embodiment 1;
FIG. 4 is a diagram depicting a configuration of the cutting insert according to Embodiment 1, and is a view of the cutting insert in the direction of AR1 in FIG. 3;
FIG. 5 is a diagram depicting a configuration of the cutting insert according to Embodiment 1, and is a view of the cutting insert in the direction of AR2 in FIG. 3;
FIG. 6 is a diagram depicting a configuration of the cutting insert according to Embodiment 1, and is a view of the cutting insert in the direction of AR3 in FIG. 3;
FIG. 7 is a diagram depicting a configuration of the cutting insert according to Embodiment 1, and is a view of the cutting insert in the direction of AR4 in FIG. 3;
FIG. 8 is a diagram depicting a configuration of a cutting insert according to a comparative example, and a cutting tool equipped with this cutting insert;
FIG. 9 is a diagram depicting a configuration of a cutting insert according to another comparative example;
FIG. 10 is a diagram depicting a configuration of the cutting insert according to Embodiment 1, and a cutting tool equipped with this cutting insert;
FIGS. 11A and 11B are diagrams depicting a configuration of a recessed part disposed in a cutting insert according to Embodiment 2 and a neighboring portion thereof; and
FIG. 12 is a diagram depicting a configuration of the cutting insert according to Embodiment 2.

### Detailed Description

Embodiments of the present invention will be described with reference to the accompanying drawings. To assist in understanding this description, an identical composing element in each drawing is denoted with a same reference sign as much as possible, and redundant description thereof will be omitted.

Embodiment 1 will be described next. A cutting tool 10 according to Embodiment 1 is a milling tool which rotary-cuts an inner surface of a pipe or the like, and is also called a "pull counter boring tool". The configuration of the cutting tool 10 described below is also applicable to other milling tools.

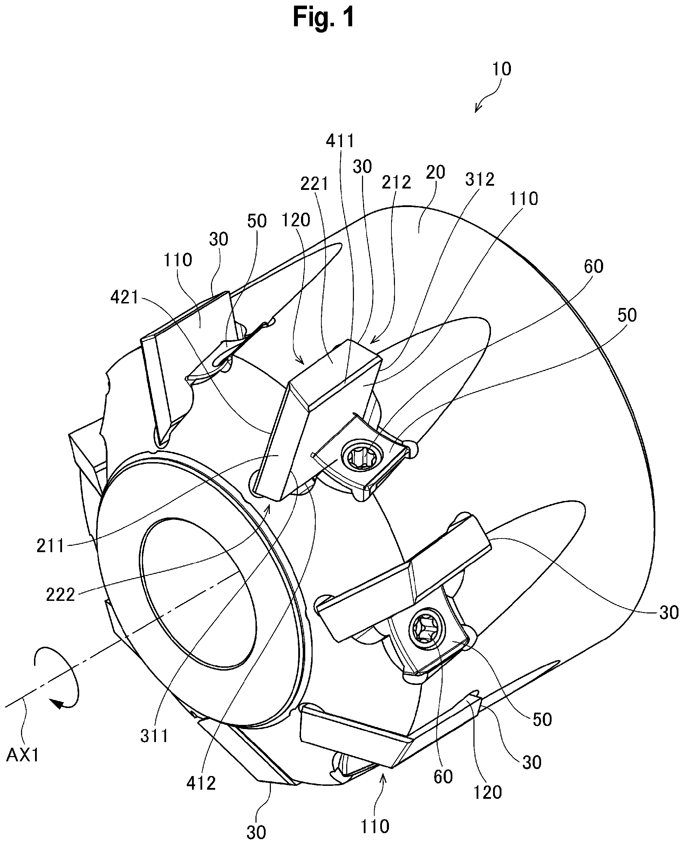

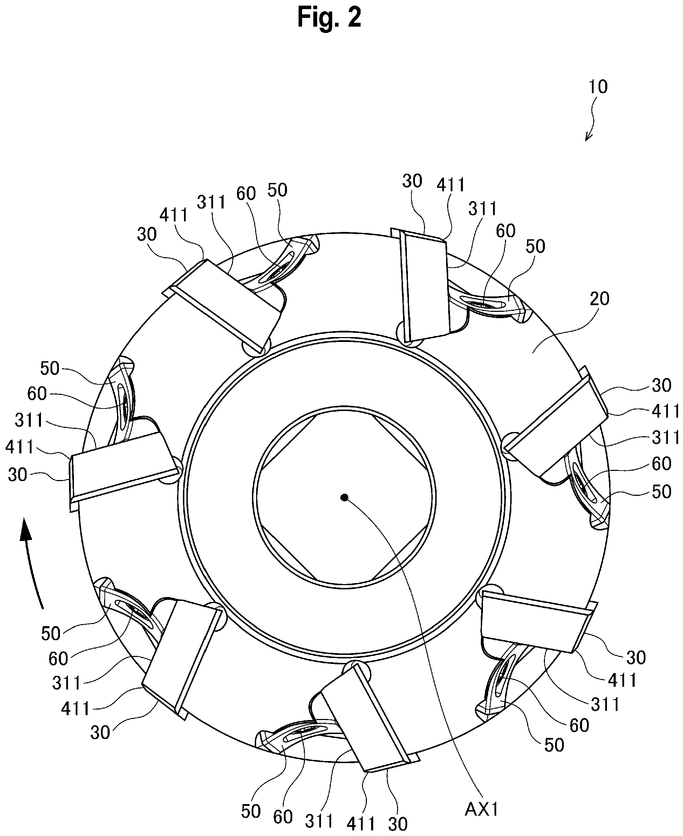

FIG. 1 is a perspective view depicting an appearance of the cutting tool 10. FIG. 2 is a diagram depicting the cutting tool 10 in FIG. 1 viewed from the leading end side along the rotational axis AX1. As illustrated in FIGS. 1 and 2, the cutting tool 10 includes a plurality of cutting inserts 30, which are mounted on a body 20.

The body 20 is a body part of the cutting tool 10, and is mounted in a holding tool, such as arbor, and is held by a machine tool (not illustrated) in this state. The body 20 has an approximately cylindrical shape, and the central axis thereof matches with the rotational axis AX1. During machining, the body 20 rotates around the rotational axis AX1 by the driving force of the machine tool. In FIGS. 1 and 2, the rotational direction is indicated by the arrow mark.

The cutting insert 30 is a member in which a first cutting edge 311 and the like, to cut a workpiece, are disposed. As mentioned above, a plurality of cutting inserts 30 are mounted, and are disposed on the periphery side of the body 20 so as to be arranged at equal intervals in the peripheral direction. The shape of each cutting insert 30 is identical. The cutting insert 30 is mounted on the body 20 by a fastening member 50.

The fastening member 50 is a member that is fastened to the body 20 by a screw 60. The fastening member 50 is displaced toward the cutting insert 30 as the screw 60 is fastened, so as to apply force to a part of the cutting insert 30 (later mentioned first end surface 110 in the example in FIG. 1). This fastening member 50 is also called a "wedge". The cutting insert 30 of Embodiment 1 is fastened to the body 20 by being inserted between the body 20 and the fastening member 50.

The method for fastening the cutting insert 30 is not limited to the above, but various fastening methods may be used. For example, a through hole penetrating the cutting insert 30 may be formed, so that the cutting insert 30 is fastened to the body 20 by inserting a screw into this through hole and fastening the screw.

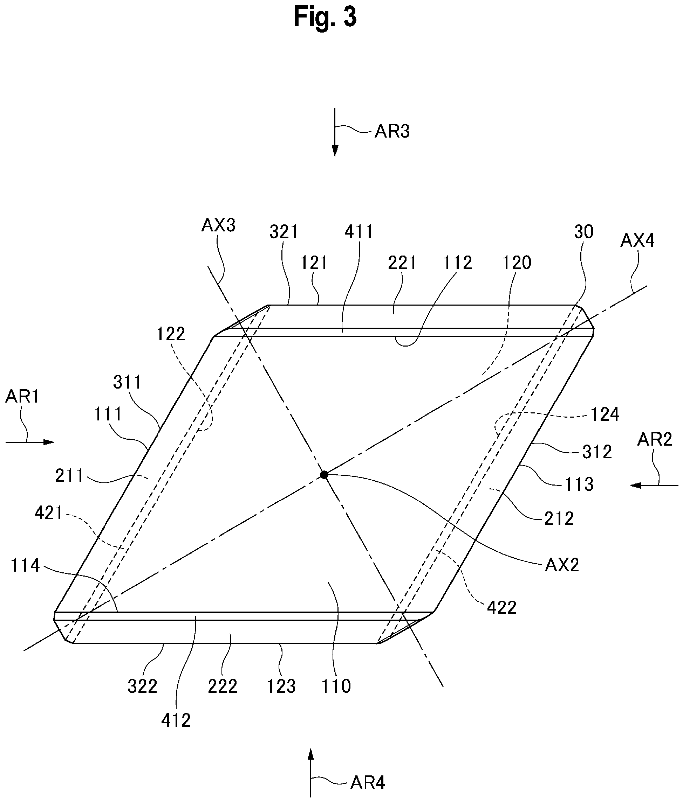

The configuration of the cutting insert 30 will be described with reference to FIG. 3 and the like. The cutting insert 30 includes a first end surface 110 and a second end surface 120. The first end surface 110 is a surface on the front side of the paper in FIG. 3, and the second end surface 120 is a surface on the rear side of the paper in FIG. 3. In other words, the first end surface 110 and the second end surface 120 face each other in the depth direction of the paper in FIG. 3. These are surfaces parallel with each other, are sandwiched between the body 20 and the fastening member 50 as illustrated in FIG. 1. A part of the first end surface 110 and a part of the second end surface 120 function as "rake surfaces" during machining.

As described later, the mounting state of the cutting insert 30 on the body 20 is not limited to the state illustrated in FIG. 1. For example, the cutting insert 30 may be mounted on the body 20 in a state where the second end surface 120, instead of the first end surface 110, is in contact with the fastening member 50.

The first end surface 110 is an approximately parallelogram surface, and is delimited by four sides: 111, 112, 113 and 114. Of these four sides, the side 111 and the side 113 are a pair of sides which are parallel with each other, and the side 112 and the side 114 are a pair of sides which are parallel with each other.

In the cutting insert 30, a total of four cutting edges (first cutting edges 311 and 312, and second cutting edges 321 and 322) are disposed. Out of these cutting edges, the two first cutting edges 311 and 312 are both disposed along the sides delimiting the first end surface 110. Specifically, the first cutting edge 311 is disposed along the side 111 at the same position as the side 111, and the first cutting edge 312 is disposed along the side 113 at the same position as the side 113. The first cutting edges 311 and 312 are parallel with each other. The rest of the cutting edges, that is, the two second cutting edges 321 and 322, are both disposed along the sides delimiting the second end surface 120, as described later.

Only one of the plurality of cutting edges of the cutting insert 30 functions as the actual "cutting edge" during machining. It depends on the mounting state of the cutting insert 30 on the body 20 as to which one of the first cutting edges 311, 312 and the second cutting edges 321 and 322 functions as the actual "cutting edge". For example, in the mounting state in FIG. 1, only the first cutting edge 311, disposed on the leading end side, functions as the actual "cutting edge".

In the cutting insert 30, a total of four margins (first margins 411 and 412, and second margins 421 and 422) are disposed. A "margin" is disposed to ensure the straight traveling stability of the cutting tool 10, and to improve roundness of a hole, for example, and in Embodiment 1, a margin is disposed as a flat surface which is inclined with respect to the adjacent surface. Out of the four margins, two first margins 411 and 412 are both disposed along the sides delimiting the first end surface 110. Specifically, the first margin 411 is disposed at a position adjacent to the side 112 along the side 112, and the first margin 412 is disposed at a position adjacent to the side 114 along the side 114. The first margins 411 and 412 are parallel with each other, and the rest of the margins, that is, the two second margins 421 and 422 are both disposed along the sides delimiting the second end surface 120, as described below.

Only one of the plurality of margins of the cutting insert 30 functions as the actual "margin" during machining. It depends on the mounting state of the cutting insert 30 on the body 20 as to which one of the first margins 411 and 412, and the second margins 421 and 422 functions as the actual "margin". For example, in the mounting state in FIG. 1, only the first margin 411, disposed on the outermost periphery side, functions as the actual "margin".

As described above, in the cutting insert 30, a pair of the first cutting edges 311 and 312 which are parallel with each other, and a pair of first margins 411 and 412 which are parallel with each other, are both disposed on the periphery side of the first end surface 110, and as a result, the shape of the first end surface 110 becomes approximately a parallelogram.

The angle formed by the first cutting edge 311 and the first margin 411 is larger than 90°, and the angle formed by the first cutting edge 312 and the first margin 412 is also larger than 90°. The angle formed by the first cutting edge 311 and the first margin 412 is smaller than 90°, and the angle formed by the first cutting edge 312 and the first margin 411 is also smaller than 90°. Thus in Embodiment 1, each of the angles is an angle that is different from 90°. Thereby the angle of the first cutting edge 311 with respect to the rotational axis AX1 in FIG. 1, for example, can be inclined appropriately.

Just like the first end surface 110, the second end surface 120 is also approximately a parallelogram, and is delimited by four sides: 121, 122, 123 and 124. Out of these sides, the side 121 and the side 123 are a pair of sides parallel with each other, and the side 122 and the side 124 are a pair of sides parallel with each other.

Out of the total of four cutting edges disposed in the cutting insert 30, the two second cutting edges 321 and 322 are both disposed along the sides delimiting the second end surface 120. Specifically, the second cutting edge 321 is disposed at the same position as the side 121 along the side 121, and the second cutting edge 322 is disposed at the same position as the side 123 along the side 123. The second cutting edges 321 and 322 are parallel with each other.

Out of the four margins disposed in the cutting insert 30, two second margins 421 and 422 are both disposed along the sides delimiting the second end surface 120. Specifically, the second margin 421 is disposed at a position adjacent to the side 122 along the side 122, and the second margin 422 is disposed at a position adjacent to the side 124 along the side 124. The second margins 421 and 422 are parallel with each other.

As described above, in the cutting insert 30, a pair of second cutting edges 321 and 322 which are parallel with each other, and a pair of second margins 421 and 422 which are parallel with each other, are both disposed on the periphery side of the second end surface 120, and as a result, the shape of the second end surface 120 becomes approximately a parallelogram.

The angle formed by the second cutting edge 321 and the second margin 421 is larger than 90°, and the angle formed by the second cutting edge 322 and the second margin 422 is also larger than 90°. The angle formed by the second cutting edge 321 and the second margin 422 is smaller than 90°, and the angle formed by the second cutting edge 322 and the second margin 421 is also smaller than 90°. Thus in Embodiment 1, each of the angles is an angle that is different from 90°.

In the cutting insert 30, four side surfaces (first side surfaces 211 and 212, and second side surfaces 221 and 222) are disposed corresponding to the four cutting edges. Each of the first side surfaces 211 and 212 and the second side surface 221 and 222 is a surface of which a part functions as a "flank" during machining.

The first side surface 211 extends from the first cutting edge 311 to the second end surface 120 disposed on the back side in FIG. 3. The above mentioned second margin 421 is disposed between the first side surface 211 and the second end surface 120. In other words, the first side surface 211 extends from the first cutting edge 311 to the second margin 421, and is connected to the second end surface 120 via the second margin 421.

The first side surface 212 extends from the first cutting edge 312 to the second end surface 120 disposed on the back side in FIG. 3. The above mentioned second margin 422 is disposed between the first side surface 212 and the second end surface 120. In other words, the first side surface 212 extends from the first cutting edge 312 to the second margin 422, and is connected to the second end surface 120 via the second margin 422.

The second side surface 221 extends from the second cutting edge 321 to the first end surface 110 disposed on the front side in FIG. 3. The above mentioned first margin 411 is disposed between the second side surface 221 and the first end surface 110. In other words, the second side surface 221 extends from the second cutting edge 321 to the first margin 411, and is connected to the first end surface 110 via the first margin 411.

The second side surface 222 extends from the second cutting edge 322 to the first end surface 110 disposed on the front side in FIG. 3. The above mentioned first margin 412 is disposed between the second side surface 222 and the first end surface 110. In other words, the second side surface 222 extends from the second cutting edge 322 to the first margin 412, and is connected to the first end surface 110 via the first margin 412.

As described above, the cutting insert 30 according to Embodiment 1 includes the pair of first side surfaces 211 and 212 which extend from the first cutting edges 311 and 312 to the second margins 421 and 422, and the pair of second side surfaces 221 and 222 which extend from the second cutting edges 321 and 322 to the first margins 411 and 412.

Only a part of one of the plurality of side surfaces (first side surface 211 and the like) of the cutting insert 30 functions as the actual "flank" during machining. It depends on the mounting state of the cutting insert 30 on the body 20 as to which one of the first side surfaces 211 and 212 and the second side surfaces 221 and 222 functions as the actual "flank". For example, in the mounting state in FIG. 1, only the first side surface 211, which is adjacent to the first cutting edge 311, functions as the actual "flank".

In the same manner, only a part of one of the two end surfaces (first end surface 110 and second end surface 120) of the cutting insert 30 functions as the actual "rake surface" during machining. It depends on the mounting state of the cutting insert 30 on the body 20 as to which one of the first end surface 110 and the second end surface 120 functions as the actual "rake surface". For example, in the mounting state in FIG. 1, only the first end surface 110, which is adjacent to the first cutting edge 311, functions as the actual "rake surface".

In Embodiment 1, the first cutting edges 311 and 312 have the same length, and the second cutting edges 321 and 322 also have the same length. Further, the first cutting edges 311 and 312 and the second cutting edges 321 and 322 also have the same length. In other words, a total of four cutting edges disposed in the cutting insert 30 all have the same length. As a result, the external shape of the cutting insert 30 in the view in FIG. 3 is approximately a rhomboid.

Moreover, the first margins 411 and 412 have the same length, and the second margins 421 and 422 also have the same length. Further, the first margins 411 and 412 and the second margins 421 and 422 also have the same length. In other words, a total of four margins disposed in the cutting insert 30 all have the same length.

An angle formed by the second cutting edge 321 and the second margin 421 is the same as an angle formed by the first cutting edge 311 and the first margin 411. An angle formed by the second cutting edge 321 and the second margin 422 is the same as the angle formed by the first cutting edge 312 and the first margin 411.

As a result of the above mentioned configuration, the shapes of the first end surface 110 and the second end surface 120 are parallelograms that are congruent with each other.

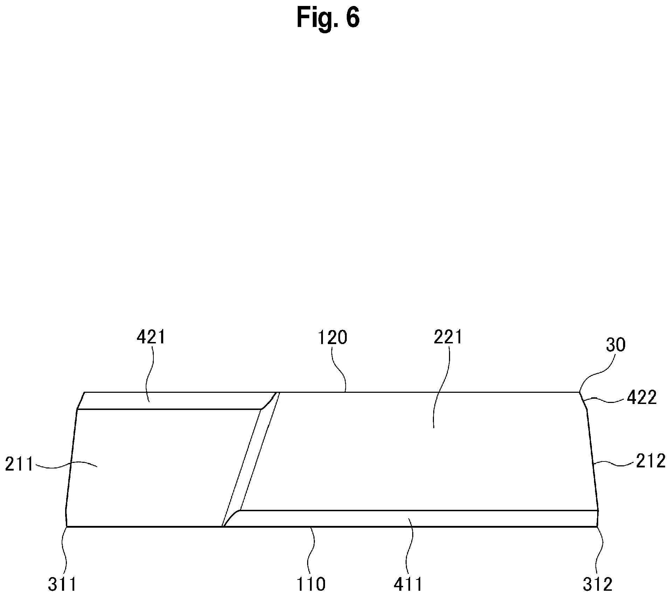

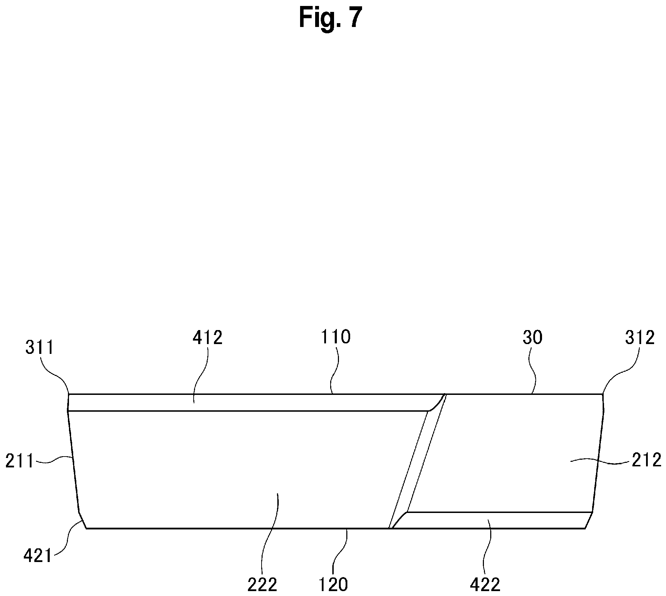

As illustrated in FIGS. 3, 6 and 7 and the like, the angle formed by the first end surface 110 and the first side surface 211, which are adjacent to each other via the first cutting edge 311, is smaller than 90°. In the same manner, the angle formed by the first end surface 110 and the first side surface 212, which are adjacent to each other via the first cutting edge 312, is also smaller than 90°. Further, these two angles are the same as each other.

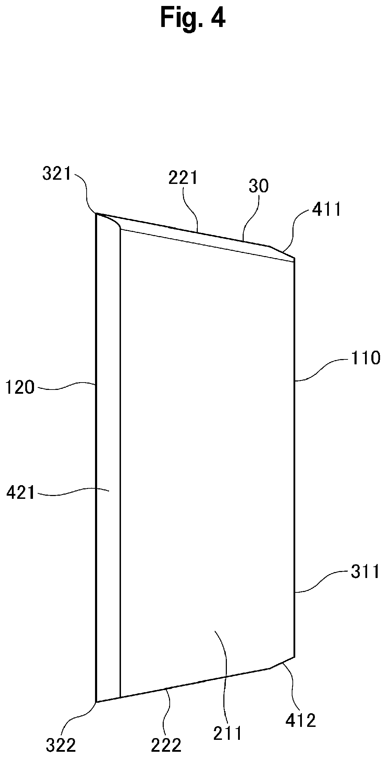

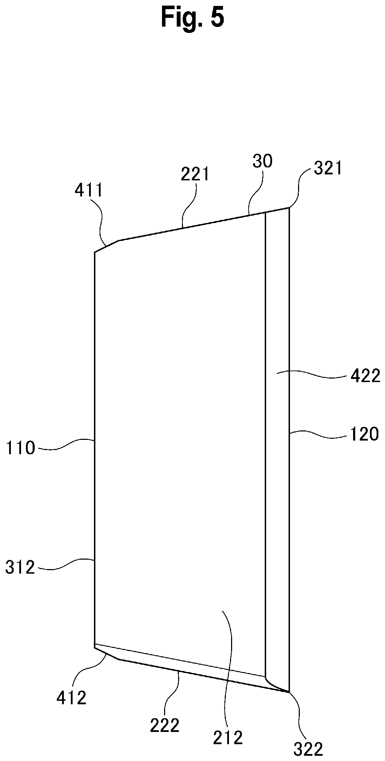

Further, as illustrated in FIGS. 3, 4 and 5, the angle formed by the second end surface 120 and the second side surface 221, which are adjacent to each other via the second cutting edge 321, is smaller than 90°. In the same manner, the angle formed by the second end surface 120 and the second side surface 222, which are adjacent to each other via the second cutting edge 322, is also smaller than 90°. Further, these two angles are the same as each other, and are also the same as the angle formed by the first end surface 110 and the first side surface 211, which are adjacent to each other via the first cutting edge 311.

In other words, in the cutting insert 30, the angle formed by a pair of surfaces (rake surface and flank) sandwiching a cutting edge is an acute angle smaller than 90°, in all four cutting edges thereof. Therefore regardless which cutting edge is used, an included angle becomes the same as the case of the positive type, and such an effect as the reduction of cutting resistance can be implemented.

The axis AX2 indicated in FIG. 3 is an axis perpendicular to the first end surface 110. In the view of the cutting insert 30 in the direction perpendicular to the first end surface 110, as illustrated in FIG. 3, the axis AX2 passes through the geometric center of the entire shape of the cutting insert 30.

When the cutting insert 30 is rotated 180° around the axis AX2, the entire shape of the cutting insert 30, after the rotation, completely overlaps with the shape of the cutting insert 30 before the rotation. This axis AX2 exists because the shape of the cutting insert 30 has the symmetric properties described above. The axis AX2 corresponds to the "first symmetric axis" in Embodiment 1. For example, if the cutting insert 30 is mounted on the body 20 in the state where the cutting insert 30 has been rotated 180° around the axis AX2 from the state in FIG. 1, the first cutting edge 312 functions as the actual "cutting edge".

The axis AX3 indicated in FIG. 3 is an axis that is parallel with the first end surface 110, and is an axis that passes through an intermediate position between the first end surface 110 and the second end surface 120. When the cutting insert 30 is rotated 180° around the axis AX3, the entire shape of the cutting insert 30, after the rotation, completely overlaps with the shape of the cutting insert 30 before the rotation. This axis AX3 exists because the shape of the cutting insert 30 has the symmetric properties described above. The axis AX3 corresponds to the "second symmetric axis" in Embodiment 1. For example, if the cutting insert 30 is mounted on the body 20 in the state where the cutting insert 30 has been rotated 180° around the axis AX3 from the state in FIG. 1, the second cutting edge 321 functions as the actual "cutting edge".

The axis AX4 indicated in FIG. 3 is an axis that is parallel with the first end surface 110, and is an axis that passes through an intermediate position between the first end surface 110 and the second end surface 120. The axis AX4 is similar to the rotational axis AX3, but faces a different direction from the axis AX3. Specifically, the axis AX4 is an axis that is perpendicular to the rotational axis AX3. When the cutting insert 30 is rotated 180° around the axis AX4, the entire shape of the cutting insert 30, after the rotation, completely overlaps with the shape of the cutting insert 30 before the rotation. The axis AX4 exists because the shape of the cutting insert 30 has the symmetric properties described above. The axis AX4 corresponds to the third symmetric axis" in Embodiment 1. For example, if the cutting insert 30 is mounted on the body 20 in the state where the cutting insert 30 has been rotated 180° around the axis AX4 from the state in FIG. 1, the second cutting edge 322 functions as the actual "cutting edge".

As described above, the cutting insert 30 is mounted on the body 20 in various orientations by being rotated around the axes AX2, AX3 and AX4 respectively, whereby a "cutting edge" that is actually used for cutting can be selected and switched among the first cutting edges 311, and 312 and the second cutting edges 321 and 322. The switching of the cutting edges can be performed on a single body 20 without providing a separate reversely designed body 20, hence the cost required for the cutting process can be reduced.

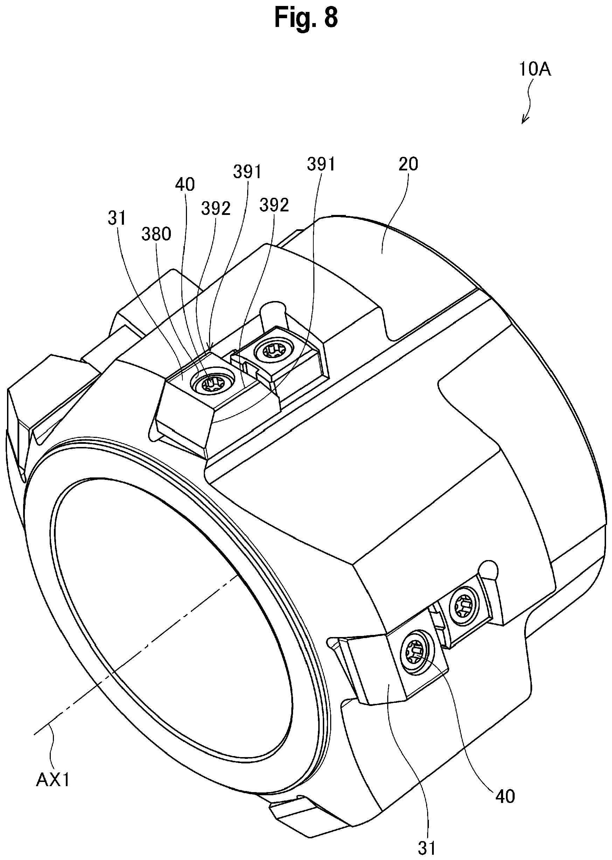

FIG. 8 indicates a configuration of a cutting tool 10A according to a comparative example. In FIG. 8, the reference sign "31" denotes a cutting insert 31 mounted on the cutting tool 10A. The cutting insert 31 is mounted on the body 20 by a screw 40 that is inserted into a through hole 380 and fastened. The cutting tool 10A is different from Embodiment 1 mainly in terms of the shape of the cutting insert 31. As illustrated in FIG. 8, in this comparative example, the cutting insert 31 has a trapezoidal cross-section, and a cutting edge 391 is disposed at two locations on a diagonal line respectively.

In the configuration of this comparative example, the cutting edge 331 to be used for cutting can be switched by rotating the cutting insert 31 180° around the screw 40. However, unlike Embodiment 1, the cutting insert 31 cannot be mounted in a reversed state. In this comparative example, a number of cutting edges mounted on one cutting insert 31 is "2". It is possible to make the number of cutting edges mounted on the cutting insert 31 "4", but in this case, a body 20 in a separate reversely designed body in FIG. 8 is required.

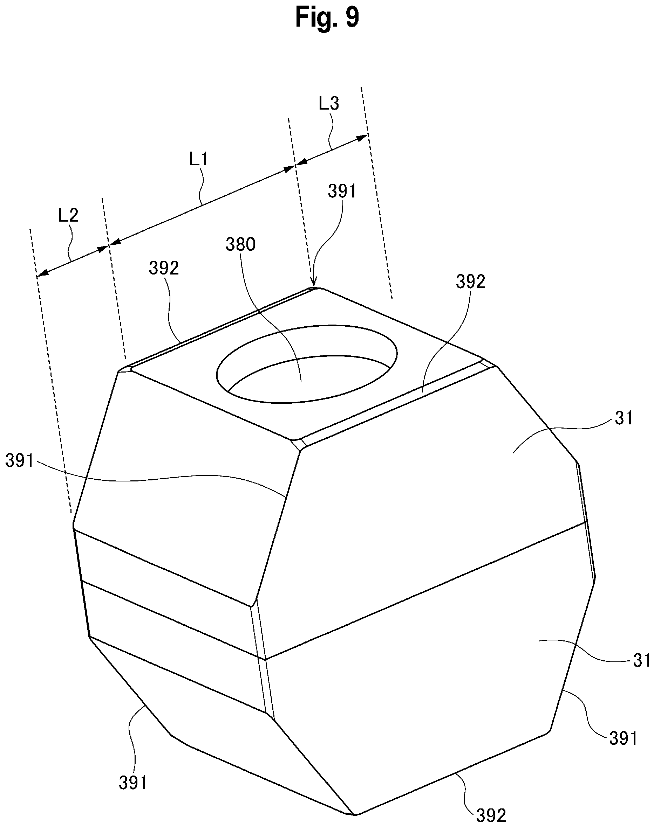

A possible configuration to dispose four cutting edges on one cutting insert 31, and use these cutting edges on the same body 20 just like Embodiment 1, is constituted of the cutting insert by two cutting inserts 31 which are superimposed and integrated, as illustrated in FIG. 9, for example. However, if such a configuration is used, the cutting insert becomes so thick that machining a small diameter workpiece may become difficult.

In these configurations of the comparative example, the margin 392 of the cutting insert 31 must be disposed at a position indicated in FIGS. 8 and 9. "L1" in FIG. 9 indicates a dimension of the margin 392 in the direction of the rotational axis AX1. "L2" and "L3" are dimensions of the cutting edges 391 in the same direction. In this comparative example, the margin 392 and the like are disposed so that L2, L1 and L3 are lined up in the direction of the rotational axis AX1, hence the size of the cutting insert 31 becomes larger yet.

In the cutting insert 30 of Embodiment 1 illustrated in FIG. 3 and the like, on the other hand, the first cutting edge 311 (312) and the second margin 421 (422) are disposed sandwiching the first side surface 211 (212), and the second cutting edge 321 (322) and the first margin 411 (412) are disposed sandwiching the second side surface 221 (222). Hence, in the view in the direction perpendicular to the first end surface 110, as in FIG. 3, the first cutting edge 311 (312) and the second margin 421 (422) approximately overlap with each other, and the second cutting edge 321 (322) and the first margin 411 (412) approximately overlap with each other. In other words, a plurality of cutting edges and a plurality of margins are disposed in a state of overlapping with each other respectively, therefore even if a plurality of cutting edges can be switched and used, an increase in the size of the cutting insert can be suppressed compared with the above mentioned comparative example.

Embodiment 2 will be described next. In the following, aspects that are different from Embodiment 1 will be mainly described, and description on aspect common with Embodiment 1 will be omitted unless necessary.

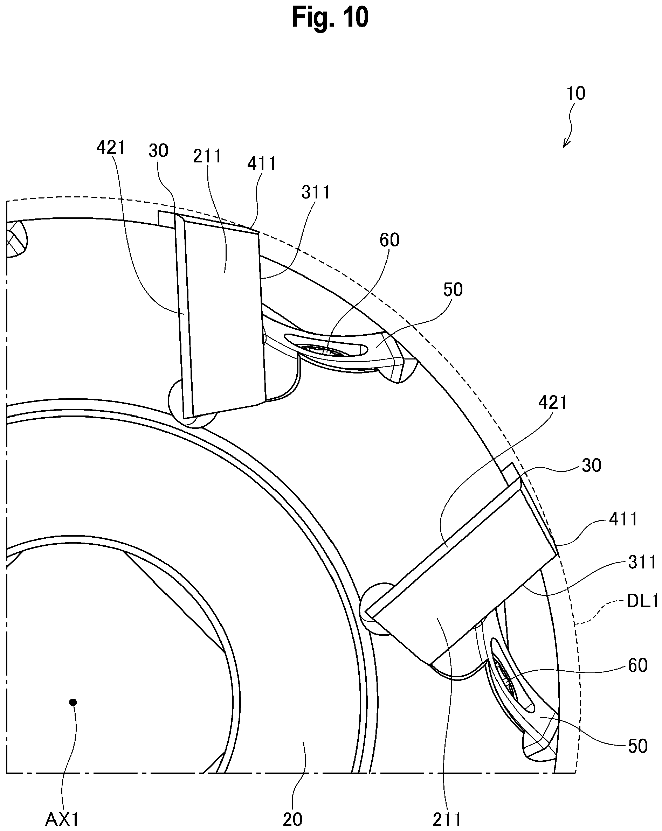

FIG. 10 is an enlarged view of a part of FIG. 2. As described above, in a case where the cutting process is performed using the first cutting edge 311, the first margin 411 is at the outermost position, and functions as the actual "margin". A dotted line DL1 on an arc in FIG. 10 indicates a position of each first margin 411. The dotted line DL1 may be regarded as the inner surface of a hole that is being machined.

In a case of performing a hole machining using the cutting tool 10, the first margin 411 rotates in a state of contacting with the inner surface of the hole, whereby the roundness of this hole improves. Therefore the position of the first margin 411 in the state where the cutting insert 30 is mounted on the body 20 has a major influence on the machining accuracy of the hole.

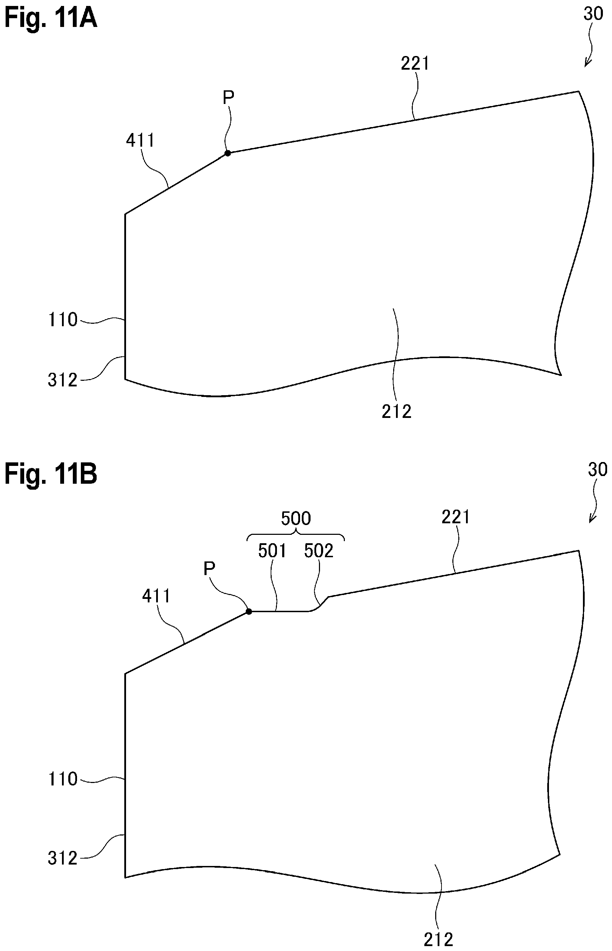

FIG. 11A illustrates a configuration of a neighboring portion of the first margin 411 when the cutting insert 30 of Embodiment 1 is viewed in a direction perpendicular to the first side surface 212. In the case where the first margin 411 functions as the actual "margin", the position of the boundary P with the second side surface 221 in particular, out of the first margin 411, has a major influence on the machining accuracy of the hole, as mentioned above. The "position of the boundary P" here means a position in the vertical direction in FIG. 11A, and is a position in a diameter direction which is perpendicular to the rotational axis AX1 in FIG. 1.

In a case where the inclination angle or the like of the second side surface 221 is changed by the influence of the machining accuracy, for example, the position of the boundary P also changes accordingly. As a result, the accuracy of the hole machining using the cutting tool 10 may drop as the position of the boundary P changes.

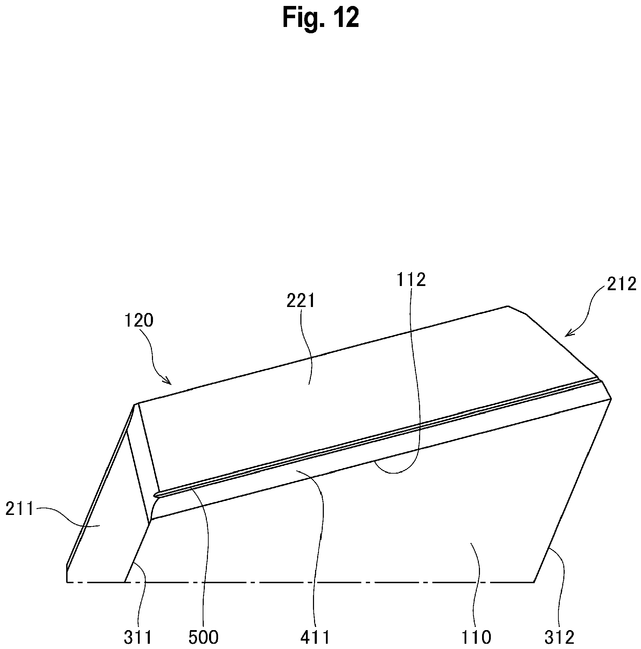

Therefore to solve this problem, a recessed part 500 is formed in a part of the cutting insert 30 in Embodiment 2. The recessed part 500 is a linear groove, as illustrated in FIG. 12, and is formed at a position between the first margin 411 and the second side surface 221 so as to extend along the first margin 411. A similar recessed part 500 is also formed at a position between the first margin 412 and the second side surface 222, a position between the second margin 421 and the first side surface 211, and a position between the second margin 422 and the first side surface 212 respectively, so as to extend along each margin, although illustration thereof is omitted. The recessed part 500 may be formed not in all but in a part of these positions.

In FIG. 11B, the configuration of the cutting insert 30 according to Embodiment 2 is illustrated from the same perspective as FIG. 11A. As illustrated in FIG. 11B, the portion adjacent to the margin (first margin 411 in this example), out of the inner surface of the recessed part 500, is a flat surface 501. Further, the portion adjacent to the flank (second side surface 221 in this example), out of the inner surface of the recessed part 500, is a surface 502 that is curved in an arc shape.

In this configuration, the boundary P that has an influence on the machining accuracy of the cutting tool 10 is a boundary between the first margin 411 and the recessed part 500. In the case of the configuration of Embodiment 2, even if the inclination angle or the like of the second side surface 221 changes, the position of the boundary P is not changed thereby. Therefore the accuracy of the hole machining using the cutting tool 10 can be sufficiently and reliably maintained.

Embodiments of the present invention have been described with reference to actual examples. The present disclosure, however, is not limited to these examples. As long as the features of the present disclosure are included, these embodiments of which design is appropriately modified by an expert skilled in the art are also included within the scope of the present disclosure. The composing elements, dispositions, conditions, shapes and the like thereof described in each embodiment are not limited to the above examples, and may be changed when necessary. A combination of each composing element of each embodiment described above may be changed appropriately as long as no technical inconsistency is generated.

## Claims

1. A cutting insert that is mounted on a body of a cutting tool, comprising:
a first end surface;
a pair of first cutting edges that are disposed to be parallel with each other along a pair of sides delimiting the first end surface respectively;
a pair of first margins that are disposed to be parallel with each other along the other pair of sides delimiting the first end surface respectively;
a second end surface that faces the first end surface;
a pair of second cutting edges that are disposed to be parallel with each other along a pair of sides delimiting the second end surface respectively;
a pair of second margins that are disposed to be parallel with each other along the other pair of sides delimiting the second end surface respectively;
a pair of first side surfaces that extend from the first cutting edges to the second margins; and
a pair of second side surfaces that extend from the second cutting edges to the first margin.

2. The cutting insert according to claim 1, wherein
an angle formed by the first end surface and the first side surface that are adjacent to each other via the first cutting edge is less than 90°.

3. The cutting insert according to claim 1 or 2, wherein
an angle formed by the second end surface and the second side surface that are adjacent to each other via the second cutting edge is less than 90°.

4. The cutting insert according to any one of claims 1 to 3, wherein
an angle formed by the first cutting edge and the first margin and the angle formed by the second cutting edge and the second margin are both angles which are different from 90°.

5. The cutting insert according to any one of claims 1 to 4, wherein
the lengths of the first cutting edges are the same as each other, and the lengths of the second cutting edges are the same as each other.

6. The cutting insert according to claim 5, wherein
the length of the first cutting edge and the length of the second cutting edge are the same as each other.

7. The cutting insert according to any one of claims 1 to 6, wherein
the first end surface and the second end surface are parallel with each other.

8. The cutting insert according to claim 7, wherein
an entire shape of the cutting insert rotated 180° around a first symmetric axis that is perpendicular to the first end surface is completely overlapped with the shape before the rotation,
the entire shape of the cutting insert rotated 180° around a second symmetric axis that is parallel with the first end surface is completely overlapped with the shape before the rotation, and
the entire shape rotated 180° around a third symmetric axis that is parallel with the first end surface and has a direction which is different from the second symmetric axis is completely overlapped with the shape before the rotation.

9. The cutting insert according to any one of claims 1 to 8, wherein
a recessed part, which extends along the first margin or the second margin, is formed in at least one of a space between the first margin and the second side surface, and a space between the second margin and the first side surface.

10. The cutting insert according to claim 9, wherein
a portion of an inner surface of the recessed part adjacent to the first margin or the second margin is a flat surface.

11. A cutting tool comprising the cutting insert according to any one of claims 1 to 10.
